Europäisches Patentamt

European Patent Office

Office européen des brevets

(11) Veröffentlichungsnummer: **0 170 992**
**B1**

## (12) EUROPÄISCHE PATENTSCHRIFT

(45) Veröffentlichungstag der Patentschrift: **16.05.90**

(21) Anmeldenummer: **85109345.0**

(22) Anmeldetag: **25.07.85**

(51) Int. Cl.⁵: **A 47 J 31/54**

(54) **Elektrischer Durchlauferhitzer für Kaffeemaschinen.**

(30) Priorität: **08.08.84 DE 8423628 u**

(43) Veröffentlichungstag der Anmeldung:
**12.02.86 Patentblatt 86/07**

(45) Bekanntmachung des Hinweises auf die
Patenterteilung:
**16.05.90 Patentblatt 90/20**

(84) Benannte Vertragsstaaten:
**CH DE FR GB IT LI**

(56) Entgegenhaltungen:
**EP-A-0 106 914**
**EP-A-0 149 199**
**DE-A-2 808 182**
**DE-B-2 530 296**
**DE-U-8 232 366**
**DE-U-8 336 499**
**DE-U-8 403 003**

(73) Patentinhaber: **ELPAG AG CHUR**
**Quaderstrasse 11**
**CH-7001 Chur (CH)**

(72) Erfinder: **Bleckmann, Ingo, Dipl.-Ing. Dr. mont.**
**Ignaz-Rieder-Kai 11**
**A-5020 Salzburg (AT)**

(74) Vertreter: **Liedl, Gerhard**
**Steinsdorfstrasse 21 - 22**
**D-8000 München 22 (DE)**

Courier Press, Leamington Spa, England.

EP 0 170 992 B1

**Beschreibung**

Die Erfindung betrifft einen elektrischen Durchlauferhitzer für Kaffeemaschinen oder ähnliche Haushaltsgeräte zur Herstellung von Aufgußgetränken nach den Merkmalen des Oberbegriffes des Patentanspruches 1.

Aus der EP—A—0 106 914 ist ein gattungsgemäßer Durchlauferhitzer bekannt, welcher aus einem hufeisenförmig oder kreisrund gebogenen Rohrheizkörper, einem ähnlich geformten und seitlich an demselben angeordnetem Wasserdurchlaufrohr sowie einem diese Teile tragenden und miteinander verbindenden Montageblech besteht. Der Rohrheizkörper besitzt eine plane Oberfläche, die von unten direkt an eine Dekorplatte angepreßt wird, auf welche das Auffanggefäß für das Aufgußgetränk abgestellt werden kann. Wenn ein Temperaturregler innerhalb der Rohrheizkörperschlaufe und ein Wasserdurchlaufrohr außerhalb derselben angeordnet wird, wofür viele Gründe sprechen, ergibt sich das Problem, daß die Temperaturregelung für das Wasserrohr unzureichend wird. Der Temperaturregler spricht überwiegend auf die Temperatur des Rohrheizkörpers oder auch noch auf die Temperatur der Dekorplatte und der auf dieser abgestellten Kaffeekanne an. Fällt jedoch die Wassertemperatur in dem Wasserdurchlaufrohr unter den Siedepunkt ab, dann wird die Wassersäule nicht mehr hochgetrieben. Wird die Siedetemperatur überschritten, führt dies zu einem unregelmäßigen Betrieb der Kaffeemaschine mit schnorchelnden Geräuschen beim Dampfaustritt und mit unnötigem Energieverbrauch.

Aus der DE—A—2 530 296 ist ein elektrischer Durchlauferhitzer für Kaffeemaschinen bekannt, bei dem an dem Wasserrohr ein wärmeleitender Streifen befestigt ist. Der Streifen überbrückt die Endbereiche des Wasserrohrs und trägt eine Temperaturregeleinrichtung.

Aus der DE—U—8 336 449 und DE—U—8 403 003 sind elektrische Durchlauferhitzer für Kaffeemaschinen der in Rede stehenden Art bekannt, bei denen ein hufeisenförmig oder halbrund gebogenes Wasserrohr innerhalb des Rohrheizkörpers angeordnet ist. Bei diesen Anordnungen ergibt sich von selbst ein Ansprechen des innen an der Montageplatte angeordneten Temperaturreglers auf die Temperatur des durch das Wasserrohr fließenden Wassers. Diese Anordnungen haben jedoch den Nachteil, daß im beheizten Bereich das Wasserrohr kürzer als der Rohrheizkörper ist, so daß dementsprechend auch eine geringere Wasserdurchflußleistung erzielt wird. Bei einem Durchbrennen des Rohrheizkörpers besteht—worauf in diesen Veröffentlichungen besonders hingewiesen wird—immer die Gefahr, daß das Kunststoffgehäuse der Kaffeemaschine in Brand gerät. Bei außenliegendem Wasserrohr schützt dieses das Kunststoffgehäuse von vom Rohrheizkörpermantel absprühenden Metallteilchen.

Die Temperaturregeleinrichtung hat mehrere Aufgaben zu erfüllen:

Die im Wasserdurchlaufrohr stehende Flüssigkeitssäule soll auf eine optimale Temperatur erhitzt werden, bei der eine der Durchlaufgeschwindigkeit im Kaffeefilter entsprechende Wassermenge kontinuierlich in das Steigrohr hochgefördert wird, so daß einerseits eine kurze Zubereitungszeit für den Kaffee erreicht, jedoch andererseits eine unnötige Dampfbildung, damit verbundener unnötiger Energieverbrauch und unangenehme schnorschelnde Geräusche vermieden werden.

Die abgestellte Kaffeekanne soll so erhitzt werden, daß möglichst schon mit Einlaufen der ersten Kaffeemenge eine höhere Temperatur als der eintropfende Kaffee erreicht wird. Der in der Kaffeekanne gesammelte Kaffee soll ständig, d.h. während der Herstellung und ein bis zwei Stunden nach derselben eine Temperatur größer als 80°C, vorzugsweise von 85 bis 90°C haben.

Bei Überhitzung, z.B. örtliches Durchbrennen des Rohrheizkörpers, muß sichergestellt sein, daß die Temperaturregeleinrichtung rechtzeitig anspricht und daß vom Rohrheizkörpermantel absprühendes glühendes Material nicht das aus Kunststoff bestehende Gehäuse der Kaffeemaschine entzündet.

Mit den bekannten Anordnungen können die genannten Anforderungen nicht in zufriedenstellender Weise erfüllt werden. Die Temperaturregeleinrichtung spricht im wesentlichen auf die Temperatur des Rohrheizkörpers an und zwar unabhängig davon, welche Temperatur auf der Oberfläche der Abstellplatte für die Kaffeekanne oder in der Kaffeekanne selbst oder auch im Wasserdurchlaufrohr herrscht. Weiterhin erfolgt der Wärmefluß von dem Rohrheizkörper zum Wasserdurchlaufrohr über die Abstellplatte bzw. über die das Wasserdurchlaufrohr und den Rohrheizkörper miteinander verbindende Schweißnaht, also von oben her in den Dampfraum des Wasserdurchlaufrohres. Dadurch entsteht das zuvor erwähnte schnorchelnde Geräusch und unnötige Dampfbildung, welche sich in einem erhöhten Energieverbrauch auswirkt.

Der Erfindung liegt nun die Aufgabe zugrunde, bei einem Durchlauferhitzer der in Rede stehenden Art mit außen liegendem Wasserdurchflußrohr eine optimale Temperaturregelung hinsichtlich des durch das Wasserdurchlaufrohr strömenden Wassers und der Erwärmung des in die Kaffeekanne eintropfenden Filtrats zu erzielen.

Die Lösung dieser Aufgabe ergibt sich aus den kennzeichnenden Merkmalen des Hauptanspruches. Die abhängigen Ansprüche beschreiben bevorzugte Ausführungsformen.

Die beiliegenden Zeichnungen dienen der weiteren Erläuterung der Erfindung. Es zeigen:

Fig. 1 eine Draufsicht auf eine erste Ausführungsform;

Fig. 2 einen Teilschnitt in vergrößertem Maßstab längs der Linie II—II in Fig. 3;

Fig. 3 eine Draufsicht auf eine weitere Ausführungsform;

Fig. 4 einen Schnitt längs der Linie IV—IV in Fig. 3 in vergrößertem Maßstab;

Fig. 5 einen Schnitt längs der Linie V—V in Fig. 3 in vergrößertem Maßstab.

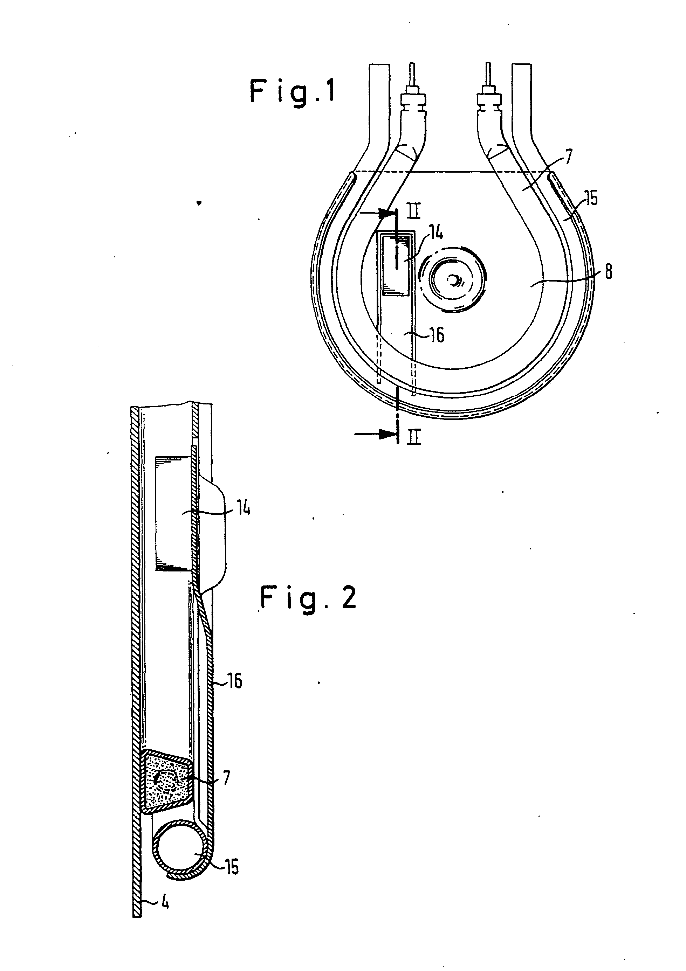

Ein Wasserdurchlaufrohr 15 ist außerhalb eines Rohrheizkörpers 7 in dem muldenförmig nach unten gebogenen und dann hochgezogenen Rand eines Montagebleches 8 im Abstand vom Rohrheizkörper 7 angeordnet. Die Wärmeeinspeisung in das Wasserdurchlaufrohr 15 erfolgt von unten her, so daß eine unnötige Dampfentwicklung und ein unnötiger Energieverbrauch verhindert werden. Aus dem Montageblech 8 ist ein Streifen 16 ausgeschnitten, welcher eine Temperaturregeleinrichtung 14 trägt. Der Streifen 16 bleibt am Rande des Montagebleches 8 mit demselben verbunden. Die temperaturregeleinrichtung 14 kann dabei, wie in Fig. 2 dargestellt, zwischen dem Streifen 16 und einer dem Abstellen der Kaffeekanne dienenden Platte 4 angeordnet sein. Der Streifen 16 ist so gebogen und zwar sei es gegen die Platte 4 oder von dieser weg, daß ein genau definierter Abstand zur Platte 4 erzielt wird. Auf diese Weise ist es möglich, daß von der Temperaturregeleinrichtung 14 sowohl die Temperatur im Wasserdurchlaufrohr 15 als auch die Temperatur auf der Platte 4 bzw. in der auf der Platte 4 abgestellten Kaffeekanne abgetastet wird.

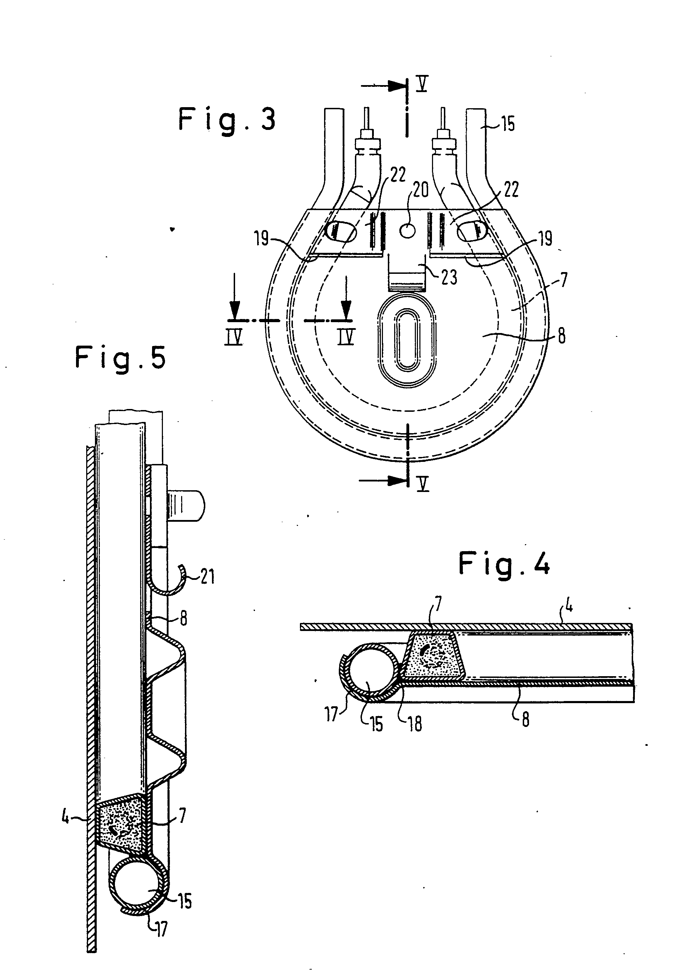

Bei der in den Fig. 3 bis 5 dargestellten Ausführungsform sind in der Montageplatte 8 Einschnitte 19 vorgesehen, die sich vom Bereich des Wasserrohrs 15 bis in den Mittelbereich erstrecken. An eine Bohrung 20 wird eine Temperaturregeleinrichtung 14 angeschraubt, auf die der Wärmefluß vom Wasserrohr 15 über die durch die Einschnitte 19 abgetrennten und ggf. nach unten ausgebogenen Lappen 22 einwirkt. Die Breite der Streifen 22 und 23 kann unter Berücksichtigung der Heizleistung des Rohrheizkörpers 7 jeweils so dimensioniert werden, daß eine optimale Ansprechcharakteristik der Temperaturregeleinrichtung 14 erreicht wird. Aus den Lappen 22 sind Halterungen 21 für Schmelzsicherungen, und zwar für sogenannte Efensicherungen, ausgestanzt und ausgebogen, durch welche beide Spannungspole vom Rohrheizkörper 7 abgeschaltet werden, wenn die Temperaturregeleinrichtung versagt und der Rohrheizkörper z.B. zu glühen beginnt. Solange jedoch Wasser im Wasserdurchlaufrohr 15 sich befindet oder die an der Bohrung 20 angeschraubte Temperaturregeleinrichtung 14 taktet, stellen die bei wesentlich höheren Temperaturen ansprechenden Sicherungen nur eine Sicherheitsreserve dar.

Das Wasserdurchlaufrohr 15 ist, wie aus den Fig. 4 und 5 ersichtlich, in einer Mulde 17 angeordnet, jedoch längs einer Fußlinie 18 mit dem Rohrheizkörper 7 verschweißt. Das Wasserrohr 15 gewährleistet dabei, daß bei Durchbrennen des Rohrheizkörpers 7 keine absprühenden, glühenden Teile nach außen, d.h. auf das Kunststoffgehäuse der Kaffeemaschine, gelangen können.

Die Temperaturregeleinrichtung 14 kann ein Bimetallschalter sein. Es kommen jedoch auch andere Regelglieder, z.B. PTC-Elemente, d.h. Widerstandselemente, mit positivem Temperaturgradienten in Betracht.

## Patentansprüche

1. Elektrischer Durchlauferhitzer für Kaffeemaschinen oder ähnliche Haushaltsgeräte zur Herstellung von Aufgußgetränken, bestehend aus einem schliefenförmig gebogenem Rohrheizkörper (7), einem diesen umgebenden, ähnlich geformten Wasserdurchlaufrohr (15) und einer Temperaturregeleinrichtung (14), welche unterhalb einer dem Abstellen einer Kaffeekanne dienenden Platte (4) angeordnet sind, wobei das Wasserrohr (15) vom Rohrheizkörper (7) nach unten so abgesetzt ist, daß nur der Rohrheizkörper (7) an der dem Abstellen der Kaffeekanne (3) dienenden Platte (4) anliegt und wobei der Rohrheizkörper (7) und das Wasserdurchlaufrohr (15) an einem Montageblech (8) befestigt sind, welches im Abstand unterhalb der dem Abstellen der Kaffeekanne dienenden Platte (4) angeordnet ist, dadurch gekennzeichnet, daß aus dem wärmeleitenden Montageblech (8) ein nach innen gerichteter Streifen (16) ausgeschnitten ist, der im Abstand von dem Rohrheizkörper (7) verläuft und der eine Temperaturregeleinrichtung (14) trägt, wobei der Streifen (16) am Rande des Montagebleches (8) mit demselben verbunden ist, so daß dementsprechend der Wärmefluß über das Wasserdurchlaufrohr (15) und über den Streifen (16) auf die Temperaturregeleinrichtung (14) erfolgt, wobei mittels der Temperaturregeleinrichtung (14) sowohl die Temperatur im Wasserdurchlaufrohr (15) als auch die Temperatur der auf der Platte (4) abgestellten Kaffeekanne (3) abgetastet wird.

2. Durchlauferhitzer nach Anspruch 1, dadurch gekennzeichnet, daß der Außenrand des Montagebleches (8) in Richtung auf die dem Abstellen der Kaffeekanne (3) dienenden Platte (4) hochgezogen ist und daß er das Wasserdurchlaufrohr (15) umgreift.

3. Durchlauferhitzer nach Anspruch 1 oder 2, dadurch gekennzeichnet, daß der Rohrheizkörper (7) einen trapezförmigen oder dreieckigen Querschnitt besitzt und daß er mit seiner breiteren Querschnittsfläche an der Unterseite der Abstellplatte (4) und mit seiner schmaleren Querschnittsfläche an dem Montageblech (8) anliegt.

4. Durchlauferhitzer nach Ansprüchen 1 bis 3, dadurch gekennzeichnet, daß der Rohrheizkörper (7) mit dem Wasserdurchlaufrohr (15) und mit dem Montageblech (8) längs einer Fußlinie (18) verlötet oder verschweißt ist und daß zwischen der dem Wasserrohr (15) zugewendeten Seitenfläche des Rohrheizkörpers (7) und dem Wasserdurchlaufrohr (5) ein sich gegen die Abstellplatte (4) erweiternder, keilförmiger Spalt (27) gebildet ist.

5. Durchlauferhitzer nach Ansprüche 1 bis 4, dadurch gekennzeichnet, daß das Mantelrohr des Rohrheizkörpers (7) und/oder das Montageblech (8) aus Stahl besteht, dessen Oberfläche vorzugsweise mit Aluminium, Nickel, Zink oder Chrom beschichtet ist oder eine Kunststoffbeschichtung trägt oder lackiert ist, insbesondere mit PTFE (Teflon).

6. Durchlauferhitzer nach Ansprüchen 1 bis 5, dadurch gekennzeichnet, daß zwei Wasserdurchlaufrohre (11, 15) vorgesehen sind und daß der Rohrheizkörper (7) zwischen den beiden Wasserdurchlaufrohren (11, 15) angeordnet ist.

7. Durchlauferhitzer nach Ansprüchen 1 bis 6, dadurch gekennzeichnet, daß der den Rohrheizkörperanschlußenden zugeordnete Randbereich des Montagebleches (8) durch die Wärmeleitung unterbrechenden Schnittlinien (19) so abgetrennt ist, daß sich ein definierter Wärmefluß vom Wasserrohr (15) und ein weiterer definierter Wärmefluß von dem Hauptkörper des Montagebleches (8) auf eine zwischen den Rohrheizkörperenden angebrachte Temperaturregeleinrichtung ergeben, ferner, daß aus dem Randbereich Halterungen (21) ausgebogen sind, die der Aufnahme von Schmelzsicherungen (Efensicherungen) dienen.

## Revendications

1. Chauffe-eau instantané électrique pour machines à café ou pour des appareils domestiques analogues pour la préparation de boissons infusées, comprenant un radiateur tubulaire (7) courbé en boucle, un tuyau d'écoulement d'eau (15) de forme similaire entourant ledit radiateur tubulaire, et un dispositif de réglage de la température (14) disposé au-dessous d'une plaque (4) destinée à recevoir une cafetière, le tuyau d'eau (15) étant dégagé du radiateur tubulaire (7) vers le bas de telle façon que seul le radiateur tubulaire (7) est appliqué contre le plaque (4) destinée à recevoir la cafetière (3) et le radiateur tubulaire (7) · et le tuyau d'écoulement d'eau (15) étant fixés sur une tôle de montage (8) laquelle est disposée à distance au-dessous de la plaque (4) destinée à recevoir la cafetière, caractérisé en ce que dans la tôle de montage (8) conductrice de chaleur est découpée une bande (16) orientée vers l'intérieur qui s'étend à distance du radiateur tubulaire (7) et porte un dispositif de réglage de la température (14), la bande (16) étant rattachée au bord de la tôle de montage (8) de telle façon que le flux de chaleur passe par l'intermédiaire du tuyau d'écoulement d'eau (15) et de la bande (16) du dispositif de réglage de la température (14), ledit dispositif de réglage de la température (14) captant aussi bien la température dans le tuyau d'écoulement d'eau (15) que la température de la cafetière (3) déposée sur la plaque (4).

2. Chauffe-eau instantané selon la revendication 1, caractérisé en ce que le bord extérieur de la tôle de montage (8) est relevée en direction de la plaque (4) destinée à recevoir la cafetière (3) et qu'il enveloppe le tuyau d'écoulement d'eau (15).

3. Chauffe-eau instantané selon l'une des revendications 1 ou 2, caractérisé en ce que le radiateur tubulaire (7) présente une section transversale trapézoïdale ou triangulaire et qu'il est appliqué avec son aire plus large de la section contre la face inférieure de la plaque de réception (4) et avec son aire plus étroite de la section contre la tôle de montage (8).

4. Chauffe-eau instantané selon l'une des revendications 1 à 3, caractérisé en ce que le radiateur tubulaire (7) est brasé ou soudé avec le tuyau d'écoulement d'eau (15) et avec la tôle de montage (8) le long d'une ligne de base (18), et que, entre la face latérale du radiateur tubulaire (7) dirigée vers le tuyau d'eau (15) et ledit tuyau d'écoulement d'eau (15), est formée une fente (27) en forme de coin qui s'élargit en direction de la plaque de réception (4).

5. Chauffe-eau instantané selon l'une des revendications 1 à 4, caractérisé en ce que le tube enveloppe du radiateur tubulaire (7) et/ou la tôle de montage (8) sont réalisés en acier dont la surface est de préférence revêtue d'aluminium, de nickel, de zinc ou de chrome ou munie d'un revêtement en matière plastique ou d'une couche de vernis, en particulier de PTFE (Téflon).

6. Chauffe-eau instantané selon l'une des revendications 1 à 5, caractérisé en ce qu'il comprend deux tuyaux d'écoulement d'eau (11, 15), et que le radiateur tubulaire (7) est disposé entre les deux tuyaux d'écoulement d'eau (11, 15).

7. Chauffe-eau instantané selon l'une des revendications 1 à 6, caractérisé en ce que la zone marginale de la tôle de montage (8) associée aux extrémités de raccordement du radiateur tubulaire est dégagée par des lignes de coupe (19) interrompant la conduction de la chaleur de manière à obtenir un flux de chaleur défini du tuyau d'eau (15) et un flux de chaleur défini supplémentaire du corps principal de la tôle de montage (8) vers un dispositif de réglage de la température disposé entre les extrémités du radiateur tubulaire, et que de la zone marginale sont dégagées, en plus, des fixations (21) destinées à recevoir des fusibles (fusible de type Efen).

## Claims

1. An electrical instant heater for· coffee machines or similar domestic appliances for producing infusion beverages, comprising a tubular heater member (7) which is bent in a loop-like configuration, a water flow pipe (15) which is of a similar configuration and which surrounds the tubular heater member (7), and a temperature regulating means (14) which is arranged beneath a plate (4) which serves for a coffee pot to be stood thereon, wherein the water pipe (15) is displaced downwardly from the tubular heater member (7) in such a way that only the tubular heater member (7) bears against the plate (4) which serves for the coffee pot (3) to be stood thereon and wherein the tubular heater member (7) and the water flow pipe (15) are secured to a mounting plate (8) which is arranged at a spacing beneath the plate (4) serving for the coffee pot to be stood thereon, characterised in that an inwardly directed strip (16) is cut out of the heat-conducting mounting plate (8) and extends at a spacing from the tubular heater member (7) and carries a temperature regulating means (14), wherein the strip (16) is connected to the mounting plate (8) at the edge thereof so that accordingly the flow of heat is by way of the water flow pipe (15) and by way of the strip (16) to the temperature regulating means (14), wherein both the temperature in the water flow pipe (15) and also the temperature of the coffee pot which is on the plate (4) is sensed by means of the temperature regulating means (14).

2. An instant heater according to claim 1 characterised in that the outer edge of the mounting plate (8) is extended upwardly towards the plate (4) serving for the coffee pot (3) to be stood thereon and that the outer edge embraces the water flow pipe (15).

3. An instant heater according to claim 1 or claim 2 characterised in that the tubular heater member (7) is of trapezoidal or triangular cross-section and that it bears with its wider cross-sectional surface against the underside of the support plate (4) and with its narrower cross-sectional surface against the mounting plate (8).

4. An instant heater according to claims 1 to 3 characterised in that the tubular heater member (7) is soldered or welded to the water flow pipe (15) and to the mounting plate (8) along a base line (18) and that a wedge-shaped gap (27) which increases towards the support plate (4) is formed between the water flow pipe (15) and the side surface of the tubular heater member (7) which is towards the water pipe (15).

5. An instant heater according to claims 1 to 4 characterised in that the jacket tube of the tubular heater member (7) and/or the mounting plate (8) comprises steel, the surface of which is preferably coated with aluminium, nickel, zinc or chromium or carries a plastics coating or is lacquered, in particular with PTFE (Teflon).

6. An instant heater according to claims 1 to 5 characterised in that there are two water flow pipes (11, 15) and that the tubular heater member (7) is arranged between the two water flow pipes (11, 15).

7. An instant heater according to claims 1 to 6 characterised in that the edge region of the mounting plate (8) which is associated with the tubular heater member connecting ends is separated off by cut lines (19) which interrupt the conduction of heat, in such a way as to provide a defined flow of heat from the water pipe (15) and a further defined flow of heat from the main body of the mounting plate (8) to a temperature regulating means which is disposed between the ends of the tubular heater member, and also that holders (21) are bent out of the edge region and serve to accommodate safety fuses ("Efen" fuses).

Fig. 1

Fig. 2

Fig.3

Fig.5

Fig.4